# EUROPÄISCHE PATENTSCHRIFT

(11) **EP 2 977 579 B1**
(45) Veröffentlichungstag und Bekanntmachung des Hinweises auf die Patenterteilung: **09.11.2016**
(21) Anmeldenummer: 15002143.4
(22) Anmeldetag: 18.07.2015
(51) Int. Cl.: F01N 9/00, F01N 3/10, F02D 41/00, F02M 21/02, F02D 41/14, G01M 15/10

(54) **VERBRENNUNGSKRAFTMASCHINE**
COMBUSTION ENGINE
MOTEUR À COMBUSTION INTERNE

(30) Priorität: 21.07.2014 AT 5732014
(43) Veröffentlichungstag der Anmeldung: 27.01.2016
(73) Patentinhaber: GE Jenbacher GmbH & Co OG, 6200 Jenbach (AT)
(72) Erfinder: Hillen, Friedhelm, 6200 Jenbach (AT)
(74) Vertreter: Torggler & Hofinger Patentanwälte

(56) Entgegenhaltungen:
- EP-A1- 0 818 617
- EP-A2- 0 894 959
- DE-C1- 19 924 500

## Beschreibung

Die Erfindung betrifft eine Verbrennungskraftmaschine mit den Merkmalen des Oberbegriffs von Anspruch 1 sowie ein Verfahren zum Betreiben einer solchen Verbrennungskraftmaschine mit den Merkmalen des Oberbegriffs von Anspruch 6.

Eine interessante Anwendung von gasbetriebenen Verbrennungskraftmaschinen (Gasmotoren) besteht in der Nutzung von Gäroder Deponiegasen, die in der Vergangenheit ungenutzt entsorgt, beispielsweise abgefackelt wurden. Diese Gase weisen häufig einen Brennwert auf, der sie zur Nutzung in Gasmotoren geeignet macht. Nachteilig an der Verwendung von Gär- oder Deponiegasen ist deren hoher Gehalt an Verunreinigungen, welche den Gasmotor schädigen können. Insbesondere sind dabei sogenannte *volatile organic silicon* compounds (VOSC) zu nennen, die meist aus Detergenzien stammen. Bei der Verbrennung im Gasmotor bildet sich aus diesen organischen Silizium-Verbindungen Silizium-Oxid, welches sich im Brennraum und benachbarten Komponenten ablagert und zu erheblichen Verschleißproblemen führt. Gasmotoren, die mit Gär- oder Deponiegas betrieben werden, weisen daher häufig eine vorgeschaltete Gasreinigungseinheit (meist mit Aktivkohlefiltern) auf, in welcher die organischen Silizium-Verbindungen aus dem Treibgas abgeschieden werden. Auch Schwefelwasserstoff und andere organische Verunreinigungen sowie Schwebeteilchen können damit entfernt werden.
Für den sicheren Betrieb der Verbrennungskraftmaschine ist es wünschenswert, die Funktion der Gasreinigungseinheit anhand der Gasqualität des in der Gasreinigungseinheit gereinigten Brenngases zu überwachen.
Eine Online-Messung der Gasqualität nach genannten Gasreinigungseinheiten ist allerdings sehr kostspielig und daher für die meisten Anlagen nicht realisierbar. Offline-Messungen der Gasqualität über Entnahme von Gasproben oder die Analyse von Schmieröl, in welchem ebenfalls Silizium-Rückstände nachweisbar sind, brauchen mehrere Tage zur Analyse und sind daher auch ungeeignet, um die Wirkung der Filteranlage zu überwachen.
Es wird daher im Stand der Technik so vorgegangen, dass meist zwei strömungstechnisch parallele Filtereinheiten vorgesehen sind, von denen jeweils nur eine von dem zu reinigenden Brenngas durchströmt wird. Die Filtereinheiten werden alternierend regeneriert oder ausgetauscht, sodass stets eine "frische" Filtereinheit zu Verfügung steht. Nach festgelegten Intervallen wird die unverbrauchte Filtereinheit als Arbeitsfilter freigeschaltet und die verbrauchte Filtereinheit regeneriert.
Die Intervalle zur Regenerierung der Filtereinheiten werden dabei konservativ gewählt, sodass ein Übertritt von Silizium-Verbindungen oder anderen schädlichen organischen Verbindungen in die Verbrennungskraftmaschine weitgehend verhindert wird. Konservativ heißt, dass die Intervalle zur Regenerierung kurz gewählt werden, auch wenn dies vom aktuellen Belegungszustand der Filtereinheit gar nicht notwendig wäre. Diese Vorgehensweise ist natürlich unwirtschaftlich, da die Filtereinheiten weit häufiger regeneriert werden, als dies eigentlich notwendig wäre. Da man aber keine Kenntnis der aktuellen Gasqualität nach der Filteranlage hat, ist dies die einzig sichere Betriebsweise.

Eine Verbrennungskraftmaschine nach dem Oberbegriff des Anspruchs 1 ist aus der Druckschrift EP 0 818 617 A1, sowie aus der Druckschrift DE 199 24 500 C1 bekannt.

Aufgabe der vorliegenden Erfindung ist es, eine Verbrennungskraftmaschine mit einer Messeinrichtung zur Bestimmung der Gasqualität eines der Verbrennungskraftmaschine zuführbaren Brenngases sowie ein Verfahren zum Betreiben einer solchen Verbrennungskraftmaschine bereitzustellen, welche bzw. welches die Nachteile des Standes der Technik vermeidet.
Gelöst wird diese Aufgabe durch eine Verbrennungskraftmaschine mit den Merkmalen von Anspruch 1, sowie einem Verfahren mit den Merkmalen von Anspruch 6. Vorteilhafte Ausführungsformen sind in den abhängigen Ansprüchen definiert.

Dadurch dass eine Messeinrichtung zur Bestimmung der Gasqualität eines der Verbrennungskraftmaschine über die Zuführleitung zuführbaren Brenngases vorgesehen ist, wobei die Messeinrichtung zumindest eine Katalysatoreinheit umfasst, welcher Abgas aus Verbrennungskraftmaschine zuführbar ist zumindest einen stromabwärts der Katalysatoreinheit angeordneten Sensor zur Erfassung einer für die Umsatzrate der Katalysatoreinheit charakteristischen Größe umfasst, wobei durch die Messeinrichtung zur Bestimmung der Gasqualität abhängig von der durch den Sensor ermittelten, für die Umsatzrate der Katalysatoreinheit charakteristischen Größe die Gasqualität des der Verbrennungskraftmaschine zugeführten Brenngases bestimmbar ist, kann also erkannt werden, ob die der Verbrennungskraftmaschine vorgeschaltete Gasreinigungseinheit ordnungsgemäß arbeitet.
Die Erfindung macht sich die Erkenntnis zunutze, dass bei Übertritt von Verunreinigungen - hervorgerufen etwa durch eine nicht ordnungsgemäß arbeitende Gasreinigungseinheit in der Brenngaszufuhr der Verbrennungskraftmaschine, eine im Abgasstrom der Verbrennungskraftmaschine angeordnete Katalysatoreinheit dies durch Abfall der Umsatzrate registriert. Der Grund dafür ist die Maskierung der Katalysatoroberfläche der Katalysatoreinheit. Bei einem Durchbruch von organischen Siliziumverbindungen tritt eine Maskierung durch Siliziumoxid (SiO2) ein. Tritt Schwefelwasserstoff (H2S) durch die Gasreinigungseinheit, so führt der Schwefel zu einer Maskierung der Katalysatoroberfläche der Katalysatoreinheit. Ein Durchbruch von partikulären Verunreinigungen kann ebenfalls zu einer Belegung der Katalysatoroberflächen führen. Durch die vorgeschlagene Anordnung ist die Umsatzrate bzw. eine Änderung der Umsatzrate der Katalysatoreinheit überwachbar und damit eine robuste Möglichkeit zur Bestimmung der Gasqualität geschaffen.

Zur Überwachung der Umsatzrate sind Sensoren geeignet, die ein Signal erzeugen abgeben können, welches indikativ für die Funktion der Katalysatoreinheit ist. In Betracht kommen z.B. Temperatursensoren, Sauerstoff-Sensoren oder CO-Sensoren. Bevorzugt ist vorgesehen, dass der Sensor ein Sensor zur Bestimmung der CO-Konzentration ist.
Sensoren zur Erfassung einer Kohlenmonoxid (CO) -Konzentration sind eine besonders günstige Möglichkeit, die Umsatzrate einer Katalysatoreinheit zu überwachen. Im unbehandelten Abgas nach der Verbrennungskraftmaschine sind stets gewisse Mengen an CO vorhanden, welche in einer Katalysatoreinheit oxidiert werden können. Damit ist die CO-Konzentration stromabwärts einer Katalysatoreinheit ein geeigneter Indikator für deren Funktionieren. Am Beispiel eines Temperatursensors würde man die Abnahme einer Umsatzrate der Katalysatoreinheit etwa durch sinkende Temperaturen feststellen, wenn die Katalysatoreinheit weniger CO oder unverbrannte Kohlenwasserstoffe umsetzt.

Bevorzugt kann vorgesehen sein, dass die Messeinrichtung wenigstens einen weiteren Sensor zur Bestimmung der CO-Konzentration stromaufwärts der Katalysatoreinheit umfasst. Mit dieser Anordnung ist die CO-Konzentration stromaufwärts und stromabwärts der Katalysatoreinheit bestimmbar. Dadurch ist eine noch genauere Überwachung der Umsatzrate der Katalysatoreinheit möglich als mit nur einem Sensor zur Bestimmung der CO-Konzentration stromabwärts der Katalysatoreinheit. Hier am Beispiel für den CO-Sensor formuliert, gilt der Vorteil dieser Anordnung natürlich auch für andere, weiter oben genannte Sensoren.

Die Anordnung der Sensoren "stromaufwärts" und "stromabwärts" der Katalysatoreinheit bezeichnet ihre Lage in Bezug auf den Abgasstrom der Verbrennungskraftmaschine.

Bevorzugt kann vorgesehen sein, dass die Messeinrichtung so angeordnet ist, dass nur ein Teil der Abgase der Verbrennungskraftmaschine die Messeinrichtung durchströmt. Dieses Ausführungsbeispiel beschreibt den Fall, nach welchem nur ein Teil des Abgasmassenstroms der Verbrennungskraftmaschine der Messeinrichtung zugeführt wird. Dies kann beispielsweise durch eine zur Abgasleitung parallele Entnahmeleitung realisiert sein, in welcher die Messeinrichtung angeordnet ist. Damit kann die Messeinrichtung klein und kostengünstig ausgebildet sein.

Gemäß einer weiteren bevorzugten Ausführungsform kann vorgesehen sein, dass die Messeinrichtung von im Wesentlichen den gesamten Abgasen der Verbrennungskraftmaschine durchströmt wird. Dieses Ausführungsbeispiel beschreibt den Fall, nach welchem im Wesentlichen der gesamte Abgasmassenstrom der Verbrennungskraftmaschine durch die Katalysatoreinheit der Messeinrichtung tritt. Somit werden die Abgase der Verbrennungskraftmaschine von der Katalysatoreinheit der Messeinrichtung katalytisch gereinigt und die Messeinrichtung dient auch zur Abgasnachbehandlung der Verbrennungskraftmaschine.

Als Verfahren ist vorgesehen, dass eine für die Umsatzrate der Katalysatoreinheit charakteristische Größe mittels des wenigstens einen Sensors gemessen wird und in Abhängigkeit der ermittelten für die Umsatzrate der Katalysatoreinheit charakteristischen Größe auf die Gasqualität des Brenngases geschlossen wird.
Bevorzugt ist vorgesehen, dass die für die Umsatzrate der Katalysatoreinheit charakteristische Größe die CO-Konzentration ist.
Wie weiter oben ausgeführt, bewirkt der Übertritt von organischen Verbindungen, insbesondere organischen Silizium-Verbindungen in die Verbrennungskraftmaschine - der Übertritt hervorgerufen etwa durch eine nicht ordnungsgemäß arbeitende Gasreinigungseinheit in der Brenngaszufuhr der Verbrennungskraftmaschine - einen Abfall der Umsatzrate einer im Abgasstrom der Verbrennungskraftmaschine angeordneten Katalysatoreinheit. Der Grund dafür ist die Maskierung der Katalysatoroberfläche durch die durchgebrochenen Spezies bzw. deren Verbrennungsprodukte.
Besonders bevorzugt kann vorgesehen sein, dass die für die Umsatzrate der Katalysatoreinheit charakteristische Größe stromaufwärts und stromabwärts der Katalysatoreinheit gemessen wird und in Abhängigkeit der gemessenen Differenz auf die Gasqualität des Brenngases geschlossen wird.
Gemäß einer Verfahrensvariante wird die CO-Konzentration stromaufwärts und stromabwärts der Katalysatoreinheit gemessen und so die Umsatzrate überwacht.
Durch die Messung der CO-Konzentration stromaufwärts und stromabwärts der Katalysatoreinheit kann die Umsatzrate der Katalysatoreinheit noch genauer erfasst werden.

Die Erfindung wird im weiteren durch die Figuren näher erläutert. Dabei zeigt
- Fig. 1: eine Verbrennungskraftmaschine mit einer Messeinrichtung zur Bestimmung der Gasqualität,
- Fig. 2: eine Verbrennungskraftmaschine gemäß einer alternativen Ausführungsform.

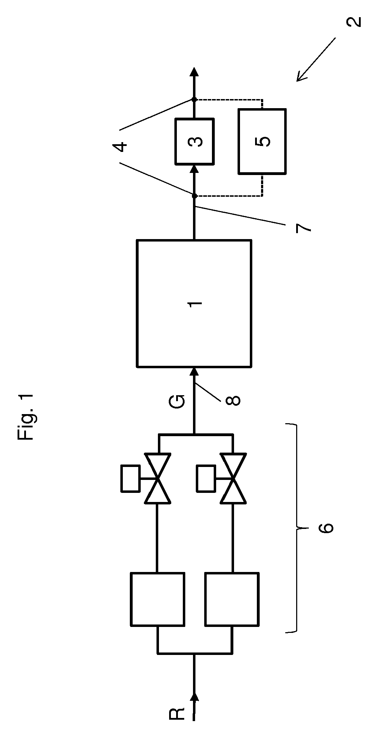

Figur 1 zeigt eine Anordnung einer Verbrennungskraftmaschine 1 mit einer in der Abgasleitung 7 der Verbrennungskraftmaschine 1 angeordneten Messeinrichtung 2. Die Messeinrichtung 2 umfasst eine Katalysatoreinheit 3 und wenigstens einen Sensor 4 zur Bestimmung der CO-Konzentration im Abgas. In der Abbildung gezeigt ist ein Sensor 4 stromabwärts der Katalysatoreinheit 3, sowie ein weiterer - optionaler - Sensor 4 stromaufwärts der Katalysatoreinheit 3. Die Signale der Sensoren zur Erfassung der CO-Konzentration im Abgas werden einer Regel-/Steuereinheit 5 zugeführt. Der Verbrennungskraftmaschine 1 wird über die Treibgasleitung 8 Treibgas G zugeführt. Der Vollständigkeit halber gezeigt ist auch eine Gasreinigungseinheit 6, in der unbehandeltes Rohgas R gereinigt wird, bevor es als Brenngas G der Verbrennungskraftmaschine 1 zugeführt wird. Über den Sensor 4 stromabwärts der Katalysatoreinheit 3 wird die CO-Konzentration des Abgases stromabwärts der Katalysatoreinheit 3 überwacht. Bei einem Durchbruch von Verunreinigungen aus dem Rohgas R in das Treibgas G detektiert der Sensor 4 eine Zunahme der CO-Konzentration im Abgas. Die Steuer-/Regeleinrichtung 5 entscheidet aufgrund der Signale, ob die Gasreinigungseinheit 6 regeneriert werden muss und/oder die Brenngasmaschine 1 abgestellt werden muss. Die Steuer-/Regeleinrichtung 5 übergibt dazu Befehle an die Gasreinigungseinheit 6 und/oder die Verbrennungskraftmaschine 1 (Signalleitungen sind nicht gezeigt). Optional wird die CO-Konzentration im Abgas mit einem zweiten Sensor 4 auch stromaufwärts der Katalysatoreinheit 3 überwacht. Durch diese Anordnung mit Sensoren 4 stromaufwärts und stromabwärts der Katalysatoreinheit 3 ist die Umsatzrate der Katalysatoreinrichtung 3 noch genauer überwachbar als mit lediglich einem Sensor 4 stromabwärts der Katalysatoreinheit 3.

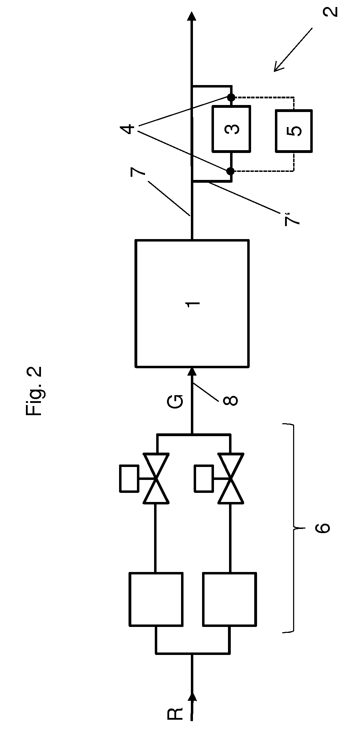

Figur 2 zeigt eine Anordnung gemäß Figur 1, wobei die Messeinrichtung 2 hier in einer zur Abgasleitung 7 strömungstechnisch parallel angeordneten Entnahmeleitung 7' angeordnet ist. Vorteil der in Figur 2 gezeigten Anordnung ist es, dass lediglich ein Teil der Abgase der Verbrennungskraftmaschine 1 durch die Messeinrichtung 2 strömen müssen und somit die Katalysatoreinheit 3 der Messeinrichtung 2 kleiner und damit kostengünstiger ausgeführt werden kann. Bezüglich der Anordnung der Sensoren 4, sowie deren Verschaltung gilt das für Figur 1 gesagte.

Die Figurenbeschreibungen sind beispielhaft für einen CO-Sensor formuliert, sie gelten natürlich auch für andere, in der Beschreibung der Erfindung genannte Sensoren, die ein Signal erzeugen abgeben können, welches indikativ für die Umsatzrate der Katalysatoreinheit 3 ist.

Liste der verwendeten Bezugszeichen:
- 1: Verbrennungskraftmaschine
- 2: Messeinrichtung
- 3: Katalysatoreinheit
- 4: Sensor(en)
- 5: Steuer-/Regeleinrichtung
- 6: Gasreinigungseinrichtung
- 7: Abgasleitung
- 7': Abgasentnahmeleitung
- 8: Brenngaszuführleitung
- G: Brenngas
- R: Rohgas

## Patentansprüche

1. Verbrennungskraftmaschine (1), umfassend:
- zumindest einen Zylinder,
- zumindest eine Zuführleitung (8) für Brenngas (G),
- zumindest eine Abgasleitung (7, 7') zur Abführung von Abgas aus der Verbrennungskraftmaschine (1),
**dadurch gekennzeichnet, dass** eine Messeinrichtung (2) zur Bestimmung der Gasqualität eines der Verbrennungskraftmaschine (1) über die Zuführleitung (8) zuführbaren Brenngases (G) vorgesehen ist, wobei die Messeinrichtung (2) zumindest eine Katalysatoreinheit (3) umfasst, welcher Abgas aus der Verbrennungskraftmaschine (1) zuführbar ist und zumindest einen stromabwärts der Katalysatoreinheit (3) angeordneten Sensor (4) zur Erfassung einer für die Umsatzrate der Katalysatoreinheit (3) charakteristischen Größe umfasst, wobei durch die Messeinrichtung (2) zur Bestimmung der Gasqualität abhängig von der durch den Sensor (4) ermittelten, für die Umsatzrate der Katalysatoreinheit (3) charakteristischen, Größe die Gasqualität des der Verbrennungskraftmaschine (1) zugeführten Brenngases (G) bestimmbar ist.

2. Verbrennungskraftmaschine (1) nach Anspruch 1, **dadurch gekennzeichnet, dass** der Sensor (4) ein Sensor zur Bestimmung der CO-Konzentration ist.

3. Verbrennungskraftmaschine (1) nach Anspruch 1 oder 2, **dadurch gekennzeichnet, dass** die Messeinrichtung (2) wenigstens einen weiteren Sensor (4) stromaufwärts der Katalysatoreinheit (3) umfasst.

4. Verbrennungskraftmaschine (1) nach wenigstens einem der Ansprüche 1 bis 3, **dadurch gekennzeichnet, dass** die Messeinrichtung (2) so angeordnet ist, dass nur ein Teil der Abgase der Verbrennungskraftmaschine (1) die Messeinrichtung (2) durchströmt.

5. Verbrennungskraftmaschine (1) nach wenigstens einem der Ansprüche 1 bis 3, **dadurch gekennzeichnet, dass** die Messeinrichtung (2) von im Wesentlichen den gesamten Abgasen der Verbrennungskraftmaschine (1) durchströmt wird.

6. Verfahren zum Betreiben einer Verbrennungskraftmaschine (1) nach wenigstens einem der Ansprüche 1 bis 5, **dadurch gekennzeichnet, dass** eine für die Umsatzrate der Katalysatoreinheit (3) charakteristische Größe mittels des wenigstens einen Sensors (4) gemessen wird und in Abhängigkeit der ermittelten für die Umsatzrate der Katalysatoreinheit (3) charakteristischen Größe auf die Gasqualität des Brenngases (G) geschlossen wird.

7. Verfahren nach Anspruch 6, **dadurch gekennzeichnet, dass** die für die Umsatzrate der Katalysatoreinheit (3) charakteristische Größe die CO-Konzentration ist.

8. Verfahren nach Anspruch 6 oder 7, **dadurch gekennzeichnet, dass** die für die Umsatzrate der Katalysatoreinheit (3) charakteristische Größe stromaufwärts und stromabwärts der Katalysatoreinheit (3) gemessen wird und in Abhängigkeit der gemessenen Differenz auf die Gasqualität des Brenngases (G) geschlossen wird.

## Claims

1. An internal combustion engine (1) including:
- at least one cylinder,
- at least one feed conduit (8) for combustion gas (G), and
- at least one exhaust gas conduit (7, 7') for carrying exhaust gas away from the internal combustion engine (1),
**characterised in that** there is provided a measuring device (2) for determining the gas quality of a combustion gas (G) which can be fed to the internal combustion engine (1) by way of the feed conduit (8), wherein the measuring device (2) includes at least one catalyst unit (3) to which exhaust gas from the internal combustion engine (1) can be fed and at least one sensor (4) arranged downstream of the catalyst unit (3) for detecting a parameter which is characteristic of the conversion rate of the catalyst unit (3), wherein the gas quality of the combustion gas (G) fed to the internal combustion engine (1) can be determined by the measuring device (2) for determining the gas quality in dependence on the parameter which is ascertained by the sensor (4) and which is characteristic of the conversion rate of the catalyst unit (3).

2. An internal combustion engine (1) as set forth in claim 1 **characterised in that** the sensor (4) is a sensor for determining the CO concentration.

3. An internal combustion engine (1) as set forth in claim 1 or claim 2 **characterised in that** the measuring device (2) includes at least one further sensor (4) upstream of the catalyst unit (3).

4. An internal combustion engine (1) as set forth in at least one of claims 1 through 3 **characterised in that** the measuring device (2) is so arranged that only a part of the exhaust gases from the internal combustion engine (1) flows through the measuring device (2).

5. An internal combustion engine (1) as set forth in at least one of claims 1 through 3 **characterised in that in that** substantially all the exhaust gases from the internal combustion engine (1) flow through the measuring device (2).

6. A method of operating an internal combustion engine (1) as set forth in at least one of claims 1 through 5 **characterised in that** a parameter characteristic of the conversion rate of the catalyst unit (3) is measured by means of the at least one sensor (4) and the gas quality of the combustion gas (G) is inferred in dependence on the ascertained parameter which is characteristic of the conversion rate of the catalyst unit (3).

7. A method as set forth in claim 6 **characterised in that** the parameter characteristic of the conversion rate of the catalyst unit (3) is the CO concentration.

8. A method as set forth in claim 6 or claim 7 **characterised in that** the parameter characteristic of the conversion rate of the catalyst unit (3) is measured upstream and downstream of the catalyst unit (3) and the gas quality of the combustion gas (G) is inferred in dependence on the measured difference.

## Revendications

1. Moteur à combustion interne (1), comprenant :
- au moins un cylindre,
- au moins un conduit d'amenée (8) pour du gaz combustible (G),
- au moins un conduit d'échappement (7, 7') pour l'évacuation des gaz d'échappement hors du moteur à combustion interne (1),
**caractérisé en ce qu'**il est prévu un dispositif de mesure (2) pour la détermination de la qualité d'un gaz combustible (G) pouvant alimenter le moteur à combustion interne (1) par le conduit d'amenée (8), ledit dispositif de mesure (2) comprenant au moins une unité catalytique (3) vers laquelle des gaz d'échappement peuvent être conduits depuis le moteur à combustion interne (1), et comprenant au moins un capteur (4) disposé en aval de l'unité catalytique (3) pour la détermination d'une grandeur caractéristique pour le rendement de l'unité catalytique (3), la qualité du gaz combustible (G) alimentant le moteur à combustion interne (1) pouvant être déterminée par le dispositif de mesure (2) pour la détermination de la qualité du gaz en fonction de la grandeur caractéristique pour le rendement de l'unité catalytique (3) déterminée par le capteur (4).

2. Moteur à combustion interne (1) selon la revendication 1, **caractérisé en ce que** le capteur (4) est un capteur pour la détermination de la concentration de CO.

3. Moteur à combustion interne (1) selon la revendication 1 ou 2, **caractérisé en ce que** le dispositif de mesure (2) comprend au moins un autre capteur (4) en amont de l'unité catalytique (3).

4. Moteur à combustion interne (1) selon au moins une des revendications 1 à 3, **caractérisé en ce que** le dispositif de mesure (2) est disposé de telle manière que seule une partie des gaz d'échappement du moteur à combustion interne (1) passe par le dispositif de mesure (2).

5. Moteur à combustion interne (1) selon au moins une des revendications 1 à 3, **caractérisé en ce que** sensiblement la totalité des gaz d'échappement du moteur à combustion interne (1) passe par le dispositif de mesure (2).

6. Procédé de fonctionnement d'un moteur à combustion interne (1) selon au moins une des revendications 1 à 5, **caractérisé en ce qu'**une grandeur caractéristique pour le rendement de l'unité catalytique (3) est mesurée au moyen dudit au moins un capteur (4) et **en ce que** la qualité du gaz combustible (G) est déduite en fonction de la grandeur caractéristique déterminée pour le rendement de l'unité catalytique (3).

7. Procédé selon la revendication 6, **caractérisé en ce que** la grandeur caractéristique pour le rendement de l'unité catalytique (3) est la concentration en CO.

8. Procédé selon la revendication 6 ou 7, **caractérisé en ce que** la grandeur caractéristique pour le rendement de l'unité catalytique (3) est mesurée en amont et en aval de l'unité catalytique (3) et **en ce que** la qualité du gaz combustible (G) est déduite en fonction de la différence mesurée.
